# EUROPÄISCHE PATENTANMELDUNG

(11) **EP 4 050 077 A1**
(43) Veröffentlichungstag der Anmeldung: **31.08.2022**
(21) Anmeldenummer: 22154934.8
(22) Anmeldetag: 03.02.2022
(51) Int. Cl.: C09J 7/21, C09J 7/22, C09J 7/28, C09J 7/29

(54) **KLEBEBAND ZUM UMMANTELN VON LANGGESTRECKTEM GUT WIE INSBESONDERE KABELSÄTZEN UND VERFAHREN ZUR UMMANTELUNG**

(30) Priorität: 26.02.2021 DE 102021201856
(71) Anmelder: tesa SE, 22848 Norderstedt (DE)
(72) Erfinder: SCHMIDLIN, Andreas, 21750 Guderhandviertel (DE)
(74) Vertreter: tesa SE

(57) **Zusammenfassung**

Die Erfindung betritt Klebeband, insbesondere zur Längsummantelung von langgetrecktem Gut wie Kabelsätzen in einem Automobil, umfassend einen Träger mit einer Oberseite und einer Unterseite, wobei der Träger bezogen auf die Querrichtung eine Breite BT aufweist, und mindestens eine auf der Unterseite des Trägers aufgetragene Klebemassenschicht, wobei auf der Klebeschicht ein zweiter Träger vorhanden ist, der erste Träger mit der Klebeschicht zumindest an einer Längskante gegenüber einer Seitenkante des zweiten Trägers übersteht, wobei der erste Überstand eine Breite von B_{Start} aufweist, dadurch gekennzeichnet, dass der erste Träger ein Gewebe oder ein Vlies ist und der zweite Träger eine metallische Schicht ist und der erste Träger ein Flächengewicht von 50 g/m2 bis 600 g/m2 aufweist.

## Beschreibung

Die Erfindung bezieht sich auf ein Klebeband zum Ummanteln von langgestrecktem Gut wie insbesondere Kabelsätzen in Automobilen Verfahren zur Anwendung des Klebebands sowie Verfahren zum Herstellen eines abgeschirmten Kabelbaums.

Im Stand der Technik ist es bekannt, Kabelbäume durch die Verwendung von Klebebändern vor dem Einbau in das Automobil zu bündeln, für die Einbausituation zu konfektionieren und definierte Bereiche mit Schutzfunktionen verschiedener Art auszurüsten. Die Klebebänder erfüllen dabei ganz unterschiedliche Funktionen. Neben der Bündelung für den Einbau in räumlich begrenzten Einbausituationen ist eine gewichtssparende Konfektionierung wünschenswert. Für den Schutz gegen verwendete Betriebsmittel wie Schmieröle, hydraulische Kraftübertragungsmedien und Waschflüssigkeiten können folienbasierte oder besonders geschlossene textile Trägermaterialien verwendet werden. Mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt. Besonderer Schutz gegen eine Schlageinwirkung wird durch abriebfeste Gewebe mit zusätzlich aufgebrachten Beschichtungen erreicht.

Zur Verbesserung der Dämpfung und Erhöhung der Abriebfestigkeit sind Klebebänder bekannt, deren Träger aus mehreren Schichten bestehen.

Die EP 1 722 968 A1 offenbart ein hoch abriebfestes Band für die Bandagierung von Kabelbäumen, insbesondere in Automobilen, aus einem Träger mit einer ersten Deckschicht A und einer zweiten Deckschicht B, wobei sich zwischen den Deckschichten A und B eine Zwischenschicht C befindet, die mit den Deckschichten A und B jeweils über deren gesamte Fläche fest verbunden ist. Die Deckschichten A und B bestehen aus einem Gewebe oder Gewirke, die Zwischenschicht C aus einer viskoelastischen Klebemasse, bevorzugt Selbstklebemasse, oder einem beidseitig klebend ausgerüsteten Klebeband.

Mit der EP 1 723 210 A1 ist ein hoch abriebfestes und geräuschdämpfendes Band für die Bandagierung von Kabelbäumen bekannt geworden, das aus einem Träger mit einer ersten Deckschicht A besteht, die mit einer zweiten Schicht C über die gesamte Fläche der Deckschicht A fest verbunden ist.

Die Deckschicht A kann Velours, Gelege, Gewebe oder Gewirke sein, die Schicht C ein poröses Flächengebilde wie ein Textil mit einer offenen, aber stabilen dreidimensionalen Struktur, wie ein Schaumstoff oder wie eine geschäumte Folie.

Beide Deckschichten weisen die gleiche Breite auf und sind dabei jeweils über deren gesamte Fläche mittels einer weiteren Klebstoffschicht ohne Versatz miteinander verbunden, so dass deren Seitenkanten bündig abschließen.

So beschreibt die EP 1 911 824 A1 ein Kabelwickelband mit einem bandförmigen, als Verbund aus einem Gewebe und aus einem Vlies ausgebildeten Träger, der zumindest einseitig vollflächig mit einer selbstklebenden Haftklebeschicht ausgerüstet ist. Das Gewebe weist mindestens 20 Kettfäden je cm und höchstens 22 Schussfäden je cm auf. Beide textile Lagen weisen auch hier die gleiche Breite auf und sind dabei jeweils über deren gesamte Fläche mittels einer weiteren Klebstoffschicht ohne Versatz miteinander verbunden, so dass deren Seitenkanten bündig abschließen.

Aufgrund der Zweilagigkeit ist das Klebeband in der Lage, sowohl an einem Dorn mit 5 mm Durchmesser als auch an einem Dorn mit 10 mm Durchmesser die Abriebklasse E gemäß LV 312 zu erfüllen.

Einen Kabelbaum umschließt das Klebeband in einer schraubenlinienförmigen Wicklung.

Aus den zwei vollflächig laminierten Materialien, wie sie in der EP 1 723 210 A1 und der EP 1 911 824 A1 beschrieben sind, ergibt sich allerdings eine höhere Steifigkeit, die sich bei Spiralwicklung nachteilig auswirkt und die insbesondere zum Flagging an den Bandenden führt.

Unter Flagging wird - bei einem um einen Körper gewickelten Klebeband - die Neigung eines Klebebandendes abzustehen verstanden. Die Ursache ergibt sich aus der Kombination von Haltekraft durch den Klebstoff, der Steifigkeit des Trägers und des Durchmessers des Kabelsatzes.

Durch die vollflächige Ausrüstung des Trägers mit einer Klebebeschichtung kann ein Kontakt der Klebmasse mit der Kabelummantelung nicht vermieden werden.

Dies führt zu einer hohen Steifigkeit des Kabelbaums, da das Band an jeder Stelle durch die Klebmasse mit dem Kabelbaum verbunden ist.

Beim schraubenlinienförmigen Ummanteln eines Kabelbaums mit dem Klebeband überlappen sich die einzelnen Wicklungen, so dass an diesen Stellen vier textile Lagen übereinander liegen, was ebenfalls zu einem sehr steifen Kabelbaum führt. Allein aufgrund der Dicke des resultierenden Kabelbaums ist bei den engen Einbauverhältnissen, die heute im Automobilbau vorherrschen, die Gefahr nicht auszuschließen, dass das Klebeband an scharfen Kanten verletzt wird, so dass die Kabelbündelung aufgerissen wird.

Die EP 2 034 576 A1 beschreibt ein Klebeband aus einem Träger und einer darauf aufgebrachten Klebemasse, das eine weitgehend klebfreie Innenfläche aufweist, indem auf die Klebeschicht ein zweiter Träger auflaminiert ist, der eine geringere Breite aufweist als die Breite des ersten Trägers.

Es sind verschiedene Ausführungsformen vorgesehen. So kann der zweite Träger an einer Seitenkante bündig mit einer Seitenkante des ersten Trägers verlaufen, wobei der erste Träger mit der Klebeschicht gegenüber der anderen Seitenkante des zweiten Trägers übersteht. Der erste Träger kann mit der Klebeschicht auch beidseitig gegenüber den Seitenkanten des zweiten Trägers überstehen oder es kann vorgesehen sein, dass der erste Träger mit der Klebeschicht einseitig gegenüber einer Seitenkante des zweiten Trägers übersteht und der zweite Träger auf der anderen Seite des ersten Trägers einseitig gegenüber einer Seitenkante des ersten Trägers übersteht. Des Weiteren ist es auch möglich, das der zweite Träger mindestens aus zwei voneinander getrennten Trägerteilen besteht, wobei das erste Trägerteil eine erste Breite und das zweite Trägerteil eine zweite Breite aufweist, wobei die Summe der Breiten der Trägerteile kleiner ist als die Breite des ersten Trägers.

Die Umwicklung eines Kabelbaums mit dem beschriebenen Klebeband erfolgt dabei nicht - wie üblich - schraubenlinienförmig, sondern derart, dass beim Umwickeln eine Längsachse des Bandes im Wesentlichen parallel zur Verlaufsrichtung des Kabelbaums ausgerichtet ist. Im Querschnitt gesehen liegt das Klebeband dabei in Form einer archimedischen Spirale um den Kabelbaum. Im Folgenden wird diese Art der Wicklung "Einschlagen des Kabelbaums" genannt.

Würde schraubenlinienförmig eingesetzt, besteht die Möglichkeit, dass die Klebmasse mit der Kabelummantelung in Kontakt kommt, was wieder zu den oben geschilderten Nachteilen führt.

Neben den klassischen Fahrzeugen mit Verbrennungsmotoren gewinnen Hybridelektro-Kraftfahrzeuge (englisch: Hybrid Electric Vehicle, HEV), Hybridelektro-Kraftfahrzeuge mit externer Lademöglichkeit (englisch: Plug In Hybrid Electric Vehicle, PHEV) und Elektro-Kraftfahrzeuge mit Batterie (Battery Electric Vehicle, BEV) zunehmend an Bedeutung. Ein Hybridelektrokraftfahrzeug ist ein Fahrzeug mit Hybridantrieb, also ein Elektrofahrzeug, das von mindestens einem Elektromotor sowie einem weiteren Energiewandler angetrieben wird und das Energie sowohl aus seinem elektrischen Speicher (Batterie) als auch einem zusätzlich mitgeführten Kraftstoff bezieht. Ein vollelektrisches Fahrzeug wird ausschließlich von einem batteriebetriebenen Elektromotor angetrieben und benötigt daher keinen fossilen Kraftstoff. Der elektrische Speicher in den verschiedenen Fahrzeugtypen wird mit unterschiedlichen Speicherkapazitäten ausgelegt, die Ladung des Speichers kann über fahrzeuginterne Energierückgewinnung und/oder über extern zugeführte elektrische Energie aus Ladesäulen und/oder über extern zugeführte elektrische Energie aus induktiver Energieübertragung erfolgen.

Für die Speicherung der elektrischen Energie haben sich Batterien mit hoher Betriebsspannung (Hochvoltbatterien) durchgesetzt, die mit Gleichspannung zwischen 380 V und 600 V betrieben werden. Für eine elektrische Versorgung aus verschiedenen Gleichstrom- oder Wechselstromquellen und die Bereitstellung von Energie für unabhängige Gleichstrom- und Wechselstromanwendungen im Fahrzeug werden integrierte Wechselrichtereinheiten benötigt. Das hohe Gefahrenpotential solcher Hochvoltsysteme erfordert einerseits einen besonderen mechanischen Schutz und eine Kennzeichnung dieser Leitungen, andererseits stellt die elektromagnetische Abstrahlung aller verwendeten Hochvoltkomponenten eine besondere Aufgabe an die Gestaltung und die Konstruktion diese Kabelsätze dar.

In allen Kraftfahrzeugen steigt die Menge der elektrischen Leitungen durch vermehrten Einsatz elektrischer Komponenten an, während gleichzeitig der Bauraum für den Leitungssatz besonders in Kleinkraftfahrzeugen zunehmend kleiner wird. Besonders die Verwendung von Signalleitungen für technisch sehr wichtige Komponenten oder auch sicherheitsrelevante Systeme in Kraftfahrzeug nehmen bei der Neukonzipierung der Fahrzeuge zu. Eine Beschädigung oder eine elektromagnetische Störung würden in solchen Fällen zu erheblichen Störungen oder Schäden führen. Bei der Konzeptionierung und Konstruktion von Elektro- und Hybridfahrzeugen ist eine besondere Aufmerksamkeit auf mechanischen und elektromagnetischen Schutz der verwendeten Leitungen zu legen.

Einen Schutz für Kabel, die von der Front des Fahrzeuges aus dem Wechselrichter zu der im Heck des Fahrzeuges positionierte Hochvoltbatterie führen, ist in der JP 2016 046 901 A1 beziehungsweise der US 9,676,349 B2 beschrieben. Es wird ein Rohr vorgeschlagen, das aus Eisen, Aluminium, Kupfer oder rostfreiem Stahl gefertigt ist und das die Zuleitungskabel für die Hochvoltbatterie aufnimmt. Diese Lösung bietet einen mechanischen und elektromagnetischen Schutz der Leitung, wobei hinsichtlich des benötigten Bauraums und der Installationsschritte deutliche Nachteile auftreten: Jede Biegung im Leitungsweg muss konstruktiv geplant werden und die entsprechenden Rohrbiegungen müssen auf dafür eingerichteten Maschinen hergestellt werden.

In DE 10 2018 000 140 A1 beziehungsweise WO 2019/138829 A1 wird ebenfalls ein Rohr vorgeschlagen, dass mit Metallgeflechten kombiniert werden kann. Die Leitungen erhalten einen elektromagnetischen Schutz. Diese Lösung verwendet auch metallische schwere Werkstoffe, die in zeit- und kostenintensiven Verfahren installiert werden können und den gewünschten Schutz bieten.

Mit der Notwendigkeit, Gewicht im Fahrzeug einzusparen, zeigt die WO 2015/049980 A1 eine spiralförmige Wicklung um die zu schützenden Kabel. Dabei wird im ersten Schritt ein harzhaltiges Material auf die Kabel gewickelt, anschließend mit einer leitfähigen Metallfolie spiralförmig überdeckt und zur Abdichtung gegen Feuchtigkeit mit einem Schrumpfschlauch eingehüllt. Die spiralförmige Wicklung erlaubt eine flexible Gestaltung des Leitungsweges, die Metallfolie bewirkt die elektromagnetische Abschirmung, der Schrumpfschlauch erfordert jedoch die Anwendung von Wärme, was in einigen Fällen zu negativen Einflüssen auf die Kabel führen kann. Die nacheinander folgenden Wickelschritte sind jedoch zeitaufwendig in der Produktion.

Die EP 2 597 740 A1 stellt eine elektromagnetische Abschirmung zur Verfügung, wobei ein flächiges Material mit der leitfähigen Metallschicht zum Kabelbündel gerichtet um die Leitungen gewickelt wird. Bei der längsförmigen Umhüllung entsteht ein Fähnchen, das umgeschlagen werden soll und den elektrischen Kontakt sichert. Eine weitere Umhüllung stellt den mechanischen Schutz und die Positionierung des Fähnchens sicher. Jedoch ist hier auch die zeit- und kostenintensive Verarbeitung für eine solche Lösung zu betonen.

Ein weiteres bekanntes System zum Schutz von Kabeln stellt ein Wellrohr dar, dazu werden Kunststoffrohre bereits bei der Herstellung mit einer Wellenstruktur versehen, damit verschiedene Biegeradien beim Einbau realisiert werden können. Die EP 2 847 838 A1 schlägt ein oder mehrere Schichten leitfähiges Metall auf der Kunststoffoberfläche vor. Diese Schichten sollen auch beim Biegen keine Risse zeigen, um zu jeder Zeit einen elektromagnetischen Schutz bereitzustellen. Bei einem solchen System werden verschiedene Durchmesser bereitgehalten und die Kabel müssen aufwendig über die Länge durch das Rohr eingefädelt werden. Beim Einschluss der metallischen Schichten zwischen den Kunststoffschichten ist die Frage der elektrischen Kontaktierung nicht beantwortet.

Aufgabe der Erfindung ist es, gegenüber dem Stand der Technik eine merkliche Verbesserung zu erzielen und ein Klebeband bereitzustellen, das in Form einer Längsbandagierung einen besonderen Schutz gegen elektromagnetischer Störungen von Leitungssätzen bereitstellt. Diese Schutzfunktion soll in besonderer Weise die Hochvoltbereiche am Leitungssatz schützen. Das Klebeband soll zwei sich widerstrebende Eigenschaften perfekt verwirklichen, zum einen elektromagnetischen Schutz gegen auftretende Störungen bieten, zum anderen trotz der damit verbundenen Steifheit auch bei geringem Gewicht auf dünnen Gut flexibel wickelbar sein.

Gelöst wird diese Aufgabe durch ein Klebeband, wie es im Hauptanspruch niedergelegt ist. Gegenstand der Unteransprüche sind dabei vorteilhafte Weiterbildungen des Klebebands, Verfahren zur Anwendung des Klebebands sowie ein Verfahren zum Herstellen eines abgeschirmten Kabelbaums.

Demgemäß betrifft die Erfindung ein Klebeband, insbesondere zur Längsummantelung von langgetrecktem Gut wie Kabelsätzen in einem Automobil, umfassend einen ersten Träger mit einer Oberseite und einer Unterseite, wobei der erste Träger bezogen auf die

Querrichtung eine Breite B_{T} aufweist, und mindestens eine auf der Unterseite des ersten Trägers aufgetragene Klebemassenschicht, wobei
- auf der Klebeschicht ein zweiter Träger vorhanden ist,
- der erste Träger mit der Klebeschicht zumindest an einer Längskante gegenüber einer Seitenkante des zweiten Trägers übersteht, wobei der erste Überstand eine Breite von B_{Start} aufweist,
- der erste Träger ein Gewebe oder ein Vlies ist und
- der zweite Träger eine metallische Schicht ist,
- der erste Träger ein Flächengewicht von 50 g/m² bis 600 g/m² aufweist.

Vorzugsweise besteht das erfindungsgemäße Klebeband im Wesentlichen aus den drei Schichten, wobei auf dem ersten oder zweiten Träger weitere, die Eigenschaften derselben optimierende Funktionsschichten vorhanden sein können. Diese Schichten sind als Bestandteil der jeweiligen Schicht definiert.

Der erste Träger ist gemäß der ersten erfindungsgemäßen Variante ein Gewebe. Besonders bevorzugte Gewebe sind so aufgebaut, dass
- die Fadenzahl in der Kette 30 bis 50/cm beträgt,
- die Fadenzahl im Schuss 18 bis 30/cm beträgt,
- die Kettfäden ein Garngewicht zwischen 40 und 400 dtex, insbesondere zwischen 44 und 330 dtex, besonders bevorzugt von 167 dtex besitzen,
- die Schussfäden ein Garngewicht zwischen 40 und 660 dtex, insbesondere zwischen 44 und 400 dtex, besonders bevorzugt von 167 dtex besitzen,

Das Flächengewicht des Trägers beträgt weiter vorzugsweise 60 bis 400 g/m²

Gemäß einer weiteren vorteilhaften Ausführungsform der Erfindung beträgt die Fadenzahl in der Kette 40 bis 50/cm, vorzugsweise 44/cm.

Gemäß einer weiteren vorteilhaften Ausführungsform der Erfindung beträgt die Fadenzahl im Schuss 20 bis 30/cm, vorzugsweise 26 bis 29/cm.

Gemäß einer weiteren vorteilhaften Ausführungsform der Erfindung handelt es sich bei dem Gewebe um ein Polyestergewebe, insbesondere ein Polyethylenterephthalatgewebe. Weitere Varianten können Polyamidgewebe oder Mischgewebe aus Polyester und Polyamid sein.

Weiter bevorzugt beträgt die Dicke des Gewebes maximal 300 µm, besonders bevorzugt 170 bis 230 µm, ganz besonders bevorzugt 190 bis 210 µm.

Der erste Träger weist gemäß einer weiteren vorteilhaften Ausführungsform der Erfindung ein Flächengewicht von 70 g/m² bis 200 g/m² auf, bevorzugt 100 bis 150 g/m².

Das Gewebe kann in Leinwand-, Köper und Atlasbindung vorliegen, des Weiteren als Ripstop. Ripstop bezeichnet Stoffe, die in einer speziellen Technik gewebt und besonders reißfest sind. Dabei werden im Abstand von normalerweise 5 bis 8 Millimetern dickere Fäden in das ansonsten dünnere Gewebe integriert. Das Gewebe erhält dadurch eine mehr oder weniger deutliche "Rechenkästchenstruktur".

Die erste Schicht kann ein Gewebe sein, wenn insbesondere mechanischer Schutz gewünscht ist.

Wenn dämpfende Eigenschaften stärker im Fokus stehen, wird als erster Träger gemäß der zweiten erfindungsgemäßen Variante ein Vlies gewählt, wobei unter "Vlies" zumindest textile Flächengebilde gemäß EN 29092 (1988) sowie Nähwirkvliese und ähnliche Systeme zu verstehen sind.

Geeignet sind grundsätzlich besonders die Vliese, die die gleiche Formstabilität wie dünne Metallfolien haben.

Besonders bevorzugt sind dabei Spinnvliese (Spundbondvliese).

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar. Ein Malivlies ist dadurch gekennzeichnet, dass ein Querfaservlies durch die Bildung von Maschen aus Fasern des Vlieses verfestigt wird. Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben. Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, StyrolButadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Keinesfalls ist die (Rest-)Klebrigkeit so hoch, dass das Vlies selbst als Klebeband fungieren kann.

Beim Spunbond (Spinnvlies) werden zunächst Endlosfasern (Filamente) aus einer Schmelze oder Lösung ersponnen. Dies geschieht bei thermoplastischen Rohstoffen direkt im Schmelzspinnverfahren (Spunmelt). Dazu wird ein Polymergranulat aufgeschmolzen und einer Spinndüse zugeführt. Die austretenden Fäden (Filamente) werden unmittelbar aerodynamisch oder mechanisch abgezogen und dabei verstreckt. Danach werden die Filamente in kreisförmigen Bögen abgelegt, wodurch multidirektional gleichmäßige Eigenschaften erreicht werden. Dies sind im engeren Sinne die Schmelzspinnvliesstoffe.

Werden die noch flüssigen Filamente durch einen Heißluftstrom zerrissen, entstehen feine Einzelfasern in einem sogenannten Schmelzblasverfahren (Meltblown). Die so erzeugten und auf einem Kühlband abgelegten Fasern ergeben Mikrofaservliese. Oft wird mehrlagig produziert, oder die Vliese werden mit anderen Werkstoffbahnen direkt als Laminate produziert (zum Beispiel SMS = Spunbond-Meltblown-Spunbond).

Nicht nur Thermoplaste, auch Thermoelaste können verarbeitet werden. Die Kombination mit verschiedenen Nachbehandlungen, wie zum Beispiel Präge- und Thermobondingverfahren ist möglich.

Erwähnenswert ist noch das elektrostatische Spinnvliesverfahren. Hier werden aufgeschmolzene Fasern im elektrostatischen Feld versprüht.

Vorteilhaft liegt das Flächengewicht des textilen Trägers zwischen 60 g/m² und 200 g/m² weiter vorteilhaft zwischen 70 g/m² und 110 g/m² und/oder die Dicke zwischen 150 bis 800 µm, weiter vorteilhaft zwischen 200 bis 350 µm.

Als Ausgangsmaterialien für das Gewebe und das Vlies des ersten Trägers und für das gegebenenfalls eingesetzte Textil des zweiten Trägers sind insbesondere (Chemie)Fasern (Stapelfaser oder Endlosfilament) aus synthetischen Polymeren, auch synthetische Fasern genannt, aus Polyester wie Polyethylenterephthalat, Polyamid, Polyimid oder Aramid, oder Mischungen der genannten Fasern vorgesehen.

Des Weiteren sind Garne, gefertigt aus den angegebenen Fasern, ebenfalls geeignet. Bei Geweben können einzelne Fäden aus einem Mischgarn hergestellt werden. In der Regel sind die Kettfäden und die Schussfäden jedoch jeweils sortenrein ausgebildet.

Die Garne oder Fäden der Gewebe können als Filamente vorliegen. Im Sinne dieser Erfindung wird unter einem Filament ein Bündel paralleler, gerader Einzelfasern/Einzelfilamente verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen verallgemeinernd nur noch der Begriff Filament verwendet.

Das Filament kann texturiert oder glatt und punktverfestigt oder unverfestigt vorliegen. Das Texturieren bezeichnet allgemein einen Vorgang, bei welchem die Fäden dauerhaft gekräuselt werden. Durch die Kräuselung werden Schlingen erzeugt, welche die elastische Dehnbarkeit und auch die Abriebbeständigkeit erhöhen.

Insbesondere wenn die eingesetzten Garne aus aus Spinndüsen gesponnenen, parallel nebeneinander liegenden Filamenten bestehen, werden diese erfindungsgemäß bevorzugt verdreht, weiter vorzugsweise können diese vor dem Verdrehen auch intermingelt sein. Beim Verdrehen erhalten sie auf Zwirnmaschinen, die üblicherweise zum Verzwirnen von zwei oder mehreren Garnen in der Textilindustrie eingesetzt werden, einen Drall, das heißt sie werden umeinander - beziehungsweise der Garnverband um seine eigene Achse - gedreht und erhalten dadurch einen größeren Zusammenhalt. Dabei stellt sich ein stabiler runder Garnkörper ein. Man unterscheidet dabei nach DIN 60 900-4 (1988-07), wie bei verdrehten Stapelfasern, je nach Drehsinn zwischen S (Rechtsdrall) und Z (Linksdrall), je nachdem, ob die einzelnen Filamente beim Senkrecht-Hängenlassen des Fadens parallel dem Schrägstrich eines S oder Z verlaufen.

Der verliehene Drall wird als Zahl der Drehungen des Fadens je m (T/m) angegeben. Bei der Verdrehung können die Filamente insbesondere eine Anzahl von Drehungen bezogen auf einen Meter Länge (T/m) im Bereich von 10 bis 400 aufweisen, wobei es besonders bevorzugt ist, wenn die Filamente eine Anzahl von Drehungen bezogen auf einen Meter Länge (T/m) im Bereich von 140 bis 260 aufweisen.

Bevorzugt wird als Material Polyamid eingesetzt, besonders bevorzugt Polyester wie Polyethylenterephthalat aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester die Vorteile, dass es zu einem sehr abriebfesten und temperaturbeständigen Träger führt, was für den speziellen Einsatzzweck zur Bündelung von Kabeln in Automobilen und beispielsweise im Motorraum von besonderer Wichtigkeit ist.

Vorteilhaft und zumindest bereichsweise weist der erste Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Der erste Träger, dessen Oberseite nach der Wickelung zu sehen ist, kann eine Färbung aufweisen, um das Klebeband zu kennzeichnen:
- orange für Spannungen > 60 Volt,
- blau für Spannungen > 48 Volt und
- andere Farben, wenn dies durch gesetzliche Vorgaben bestimmt wird

Der erste Träger stellt den mechanischen Schutz an der äußerer Lage der Umhüllungslösung zur Verfügung, zusätzlich ist die Klebebandumhüllung so flexibel am Leitungssatz einsatzbar, dass jede Einbausituation geformt werden kann.

Der klebend ausgerüstete Gewebeträger oder Vliesträger trägt den zweiten Träger und stellt die sichere Umhüllung und den dauerhaften klebenden Verschluss der daraus resultierenden Längsbandagierung, auch Umhüllung genannt, zur Verfügung.

Der Klebemassenauftrag, bezogen auf die Trägerfläche, liegt bevorzugt zwischen 40 und 160 g/m², vorzugsweise zwischen 60 und 130 g/m², weiter vorzugsweise zwischen 80 und 100 g/m².

Der zweite Träger ist eine metallische Schicht, die so gestaltet ist, dass sie in Quer- und Längsrichtung leitfähig gestaltet ist, um elektromagnetische Störungen zu dämpfen und im besten Fall weitgehend zu eliminieren.

Die Richtung des Stoffflusses in der Maschine, in der ein Gewebe, ein Vlies oder allgemein ein Stoff hergestellt wird, wird als Maschinenrichtung oder Laufrichtung (Längsrichtung) bezeichnet, die Richtung im rechten Winkel hierzu dementsprechend als Querrichtung.

Als metallische Schicht können erfindungsgemäß zum Einsatz kommen Metallfolien, Schichtlaminate, in denen zumindest eine Schicht leitfähig ist, oder metallisierte textile Träger sowie Träger, insbesondere textile Träger, die mit einer metallischen Schicht überzogen sind.

Als Metalle für die Metallfolie können gewählt werden Silber, Kupfer, Gold, Platin, Aluminium und Aluminiumverbindungen, Zinn, Nichrom, NIROSTA, Titan, Metalloxide wie Zinnoxide, Zinkoxide, Magnesiumoxide, vorzugsweise Aluminium. Diese Aufzählung ist dabei als nicht abschließend zu betrachten, sondern der Fachmann kann weitere hier nicht explizit genannte Metallschichten wählen, ohne den Erfindungsgedanken zu verlassen. Eine antioxidative, der Korrosion entgegenwirkende Schicht auf der metallischen Schicht kann vorteilhaft sein, weil die Lebensdauer der metallischen Schicht dadurch erhöht wird.

Der Begriff "textiler Träger" beziehungsweise "textiles Flächengebilde" umfasst sowohl Gewebe, Gewirke, Gestricke, Gelege, Bänder, Geflechte, Abstandsgewirke, Nähwirkstoffe, Nadelflortextilien und Filze, die zum Teil aus Garnen hergestellt werden, als auch nichtgewebte Faservliese oder Vliesstoffe aus Fasern (nonwovens).

Als Fasermaterialien kommen grundsätzlich alle für die Herstellung von Textilien üblicherweise eingesetzten Fasermaterialien in Betracht. Hierzu zählen Baumwolle, Wolle, Hanffaser, Sisalfasern, Flachs, Ramie, Polyacrylnitril, Polyesterfasern, Polyamidfasern, Viskose, Seide, Acetatfasern, Triacetatfasern, Aramidfasern und dergleichen.

Bevorzugt werden Polyamidfasern eingesetzt, besonders bevorzugt Polyesterfasern wie Polyethylenterephthalatfasern. Des Weiteren sind Garne, gefertigt aus den angegebenen Fasern, ebenfalls geeignet so wie die oben beschriebenen Garne.

Beispielhaft seien die folgenden metallischen Schichten genannt:
- Aluminiumfolie, insbesondere mit einer Dicke von 15 bis 100 µm
- Kupferfolie, insbesondere mit einer Dicke von 10 bis 80 µm
- Edelstahlfolie, insbesondere mit einer Dicke von 10 bis 60 µm
- Schichtlaminate aus einer Kunststofffolie mit einer Dicke zwischen 20 und 50 µm, insbesondere 36 µm, und einer metallischen Oberfläche mit einer Dicke zwischen 15 und 25 µm, insbesondere 20 µm
- Schichtlaminate aus einem Papier und metallischen Oberfläche
- Metallisierte Gewebe oder Vliese

Die metallischen Folien können auch geprägt sein, zum Beispiel in Kugelnoppenform, und stellen damit eine im Vergleich zur Umhüllung vergrößerte Oberfläche zur Verfügung.

Bezogen auf die Breite B_{Schutz} der zweiten Schicht sind zwei Varianten des Klebebands erfindungsgemäß.

Bei der ersten Variante wird die Breite B_{Schutz} des zweiten Trägers in Form der metallischen Schicht auf der Klebeschicht so gewählt, dass die Breite B_{Schutz} geringer ist als die Breite B_{T} des ersten Trägers, und zwar dergestalt, dass der erste Träger mit der bevorzugt vollflächig aufgetragenen Klebeschicht beidseitig gegenüber den Seitenkanten des zweiten Trägers übersteht, so dass sich ein zweiter Überstand mit einer Breite B_{Hülle} ergibt.

Bei der zweiten Variante wird die Breite B_{Schutz} des zweiten Trägers in Form der metallischen Schicht auf der bevorzugt vollflächig aufgetragenen Klebeschicht so gewählt, dass der zweite Träger gegenüber der zweiten Seitenkante des ersten Trägers mit der Klebeschicht übersteht, so dass sich ein zweiter Überstand mit einer Breite B_{Fahne} ergibt.

Die Breite B_{Schutz} kann gleich der Breite B_{T} des ersten Trägers gewählt werden, dann ist die Breite B_{Start} des ersten Überstands gleich der Breite B_{Fahne} des zweiten Überstandes.

Die Breite B_{Schutz} des zweiten Trägers kann aber auch (geringfügig) kleiner als die Breite B_{T} des ersten Trägers gewählt werden oder größer. In diesen Fällen unterschieden sich die Breite B_{Start} des ersten Überstands und die Breite B_{Fahne} des zweiten Überstandes.

Für die einzelnen Abschnitte haben sich die folgenden Breiten als besonders vorteilhaft erwiesen:
B_{Start} weist eine Breite von 3 bis 20 mm, vorzugsweise 5 bis 10 mm auf.
B_{Schutz} weist eine Breite von 50 bis 200 mm, vorzugsweise 80 bis 160 mm auf oder eine Breite von 100 bis 400 mm, vorzugsweise 160 bis 320 mm, wenn das Gut zweilagig eingeschlagen werden soll.
B_{Hülle} weist eine Breite von 50 bis 200 mm, vorzugsweise 80 bis 160 mm auf.
B_{Fahne} weist eine Breite von 50 bis 200 mm, vorzugsweise 80 bis 160 mm auf.

Die Breiten der einzelnen Abschnitte werden grundsätzlich so gewählt, dass das Klebeband sehr gut einsetzbar ist.

Der Abschnitt B_{Start} dient während des Vorgangs der Ummantelung dazu, das Klebeband leicht auf dem Gut zu fixieren, so dass ein Verrutschen während des weiteren Wickelvorganges nicht auftritt.

Der Abschnitt B_{Schutz} umhüllt das einzuschlagende Gut, also zumeist den Kabelbaum, wobei Kabelbäume mit Durchmessern von 10 mm bis zu 40 oder 50 mm umwickelt werden. Die Breite richtet sich insbesondere auch danach, ob der das Gut ein- oder zweilagig von dem zweiten Träger eingeschlagen werden soll.

Der Abschnitt B_{Hülle} dient dazu, das Klebeband sicher zu fixieren. Um eine sichere Fixierung zu gewährleisten, kann es vorteilhaft sein, wenn dieser Abschnitt so breit ist, dass das gesamte Gut ein weiteres Mal komplett eingeschlagen wird.

Weiter vorzugsweise weist die metallische Schicht eine elektrische Kontaktierung zu einem Leiter auf.

Die elektrische Kontaktierung der metallische Schicht ist notwendig, wenn der induzierte Strom abgeleitet werden muss. Ein Schirmstrom kann sicher abgeleitet werden, wenn an beiden Enden des Leitungssatzes eine Kontaktierung erfolgt.

Beispielsweise kann die elektrische Kontaktierung dadurch erreicht werden, dass das Klebeband so den Kabelbaum umhüllt, dass die elektrisch leitenden Stecker an beiden Enden des Leitungssatzes die metallische Schicht elektrisch leitfähig berühren. Über die Stecker erfolgt dann eine Ableitung des Schirmstroms.

Eine weitere Möglichkeit, über die Länge des Leitungssatzes die Ableitung sicherzustellen, besteht darin, eine unisolierte Leitung (englisch drain wire) zwischen metallsicher Schicht und Kabelbaum eingelegt ist, die dann mit einem Stecker verbunden ist, so dass es über diesen Steckkontakt zu einer Ableitung kommt.

Die Wicklung kann mit einen elektrisch leitenden Ringschluss aufgebracht werden, dabei wird die elektrisch leitendende Schicht so auf das Kabel aufgebracht, dass in Richtung des Kabelumfangs eine elektrisch leitende Verbindung entsteht. Diese Form der Umwicklung erzeugt besonders bei hochfrequenten Signalen einen positiven Effekt und reduziert die Induktivität und die elektromagnetische Verträglichkeit im hochfrequenten Übertragsbereich.

Für die Klebemasse auf dem ersten Träger kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar. Sofern auf den freiliegenden Oberflächen des ersten oder des zweiten Trägers weitere Klebemassenschichten vorhanden sind, können diese auch aus den im Folgenden Klebemassen gewählt werden.

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Besonders bevorzugt ist eine Haftklebemasse in Form einer getrockneten Polymerdispersion, wobei das Polymer aufgebaut ist aus:
(a) 95,0 bis 100,0 Gew.-% n-Butylacrylat und/oder 2-Ethylhexylacrylat
(b) 0,0 bis 5,0 Gew.-% eines ethylenisch ungesättigten Monomers mit einer Säure- oder Säureanhydridfunktion

Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 97,0 oder 98,0 Gew.-% bis 99,0 Gew.-% n-Butylacrylat und/oder 2-Ethylhexylacrylat und 1,0 bis 2,0 Gew.-% oder 3 Gew.-% eines ethylenisch ungesättigten Monomers mit einer Säure- oder Säureanhydridfunktion.

Neben den aufgeführten Acrylatpolymeren können der Haftklebemasse neben gegebenenfalls vorhandenen Restmonomeren zusätzlich Klebrigmacher und/oder Zuschlagstoffe wie Lichtschutz- oder Alterungsschutzmitteln zugesetzt werden. Insbesondere sind keine weiteren Polymere wie Elastomere in der Haftklebemasse enthalten, das heißt, das die Polymere der Haftklebemasse bestehen nur aus den Monomeren (a) und (b) in den angegebenen Mengenverhältnissen.

Bevorzugt bildet n-Butylacrylat das Monomer (a).

Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Bevorzugt ist (Meth-)acrylsäure der Formel I, 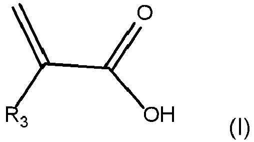 wobei R³ = H oder CH₃ ist, bevorzugt wird gegebenenfalls die Mischung aus Acrylsäure oder Methacrylsäure verwendet. Besonders bevorzugt ist Acrylsäure.

Gemäß einer besonders bevorzugten Variante weist das Polymer die folgende Zusammensetzung auf:
(a) 95,0 bis 100,0 Gew.-%, vorzugsweise 95,0 bis 99,5 Gew.-%, weiter vorzugsweise 98,0 bis 99,0 Gew.-% n-Butylacrylat und
(b) 0,0 bis 5,0 Gew.-%, vorzugsweise 0,5 bis 5,0 Gew.-%, weiter vorzugsweise 1,0 bis 2,0 Gew.-% Acrylsäure

Die Polymerdispersion wird hergestellt durch das Verfahren der Emulsionspolymerisation der genannten Komponenten. Beschreibungen dieses Verfahrens sind zum Beispiel zu finden in "Emulsion Polymerization and Emulsion Polymers" von Peter A. Lovell and Mohamed S. EI-Aasser - Wiley-VCH 1997 - ISBN 0-471-96746-7 oder in EP 1 378 527 B1.

Bei der Polymerisation ist es nicht auszuschließen, dass nicht alle Monomere zu Polymeren umgesetzt werden. Dabei ist es naheliegend, dass der Restmonomergehalt möglichst klein sein soll.

Bevorzugt werden Klebemassen umfassend die Polymerdispersion mit einem Restmonomerengehalt von kleiner gleich 1 Gew.-%, insbesondere kleiner gleich 0,5 Gew.-% (bezogen auf die Masse der getrockneten Polymerdispersion) bereitgestellt.

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Der Einsatz von Klebrigmachern zur Steigerung der Klebkräfte von Haftklebemassen ist grundsätzlich bekannt. Dieser Effekt stellt sich auch ein, wenn der Klebmasse bis zu 15 Gewichtsteile (entspricht < 15 Gewichtsteile), beziehungsweise 5 bis 15 Gewichtsteile Klebrigmacher (bezogen auf die Masse der getrockneten Polymerdispersion) hinzugefügt werden. Bevorzugt werden 5 bis 12, weiter bevorzugt 6 bis 10 Gewichtsteile Klebrigmacher (bezogen auf die Masse der getrockneten Polymerdispersion) hinzugefügt.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅- oder C₉-Monomere), Terpenphenolharze, Polyterpenharze auf Basis von Rohstoffen wie zum Beispiel α- oder ß-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen.

Besonders bevorzugt ist die Variante, bei der der Haftklebemasse keinerlei Klebharze zugesetzt sind.

Insbesondere nicht zugesetzt werden der Haftklebemasse die folgenden Substanzen:
- Kohlenwasserstoffharze (zum Beispiel Polymere auf Basis ungesättigter Cs- oder C₉-Monomere)
- Terpenphenolharze
- Polyterpenharze auf Basis von Rohstoffen wie zum Beispiel α- oder ß-Pinen
- aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit

Wegen der besonderen Eignung als Klebemasse für Klebebänder von automobilen Kabelsätzen in Hinblick auf die Foggingfreiheit sind lösungsmittelfreie Acrylat-Hotmeltmassen zu bevorzugen, wie sie in DE 198 07 752 A1 sowie in DE 100 11 788 A1 näher beschrieben sind.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben. Die Klebemasse auf Acrylathotmelt-Basis kann UV-vernetzt werden. Andere Vernetzungsarten sind aber auch möglich, zum Beispiel die Elektronenstrahlenvernetzung.

In einer weiteren bevorzugten Ausführungsform werden als Selbstklebemassen Copolymerisate aus (Meth)¬acrylsäure und deren Estern mit 1 bis 25 C-Atomen, Malein-, Fumar- und/oder Itaconsäure und/oder deren Estern, substi¬tuierten (Meth)acrylamiden, Maleinsäureanhydrid und anderen Vinylverbindungen, wie Vinylestern, insbesondere Vinyl¬acetat, Vinylalkoholen und/oder Vinylethern eingesetzt.

Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal^{®}, insbesondere acResin A 260UV, von der BASF geführt wird. Diese Klebemasse mit niedrigem K-Wert erhält ihre anwendungsgerechten Eigenschaften durch eine abschließende strahlenchemisch ausgelöste Vernetzung.

Weitere hervorragend geeignete Klebemassen werden in der EP 3 540 024 A1, der EP 2 520 627 A1, der EP 2 522 705 A1, der EP 2 520 628 A1, der EP 2 695 926 A1 und der EP 2 520 629 A1 beschrieben.

Ebenfalls bevorzugt besteht die Klebebeschichtung aus einer Klebmasse auf Basis Synthesekautschuk, nämlich insbesondere eine Klebemasse aus mindestens einem Vinylaromaten-Block-Copolymer und zumindest einem Klebharz. Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Als Klebrigmacher dienen Klebharze, die mit dem Elastomerblock der Styrolblockcopolymere verträglich sind.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Als weitere Additive können allen genannten Typen von Klebemassen Lichtschutzmittel wie zum Beispiel UV-Absorber, sterisch gehinderte Amine, Antiozonantien, Metalldesaktivatoren, Verarbeitungshilfsmittel, endblockverstärkende Harze zugesetzt werden.

Füllstoffe wie zum Beispiel Siliziumdioxid, Glas (gemahlen oder in Form von Kugeln als Voll- oder Hohlkugeln), Mikroballons, Aluminiumoxide, Zinkoxide, Calciumcarbonate, Titandioxide, Ruße, Silikate und Kreide, um nur einige zu nennen, ebenso Farbpigmente und Farbstoffe sowie optische Aufheller können ebenfalls Verwendung finden.

Üblicherweise werden Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren zum Beispiel Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Die Herstellung und Verarbeitung der Haftklebemassen kann aus Lösung, Dispersion sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren.

Die Klebemasse kann in Längsrichtung des Klebebands in Form eines Streifens aufgebracht sein, der eine geringere Breite aufweist als der erste Träger.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Bevorzugt ist die Klebemasse vollflächig auf dem ersten Träger aufgetragen.

Gerade wenn auf den freiliegenden Oberflächen des ersten oder des zweiten Trägers weitere Klebemassenschichten vorhanden sind, werden diese bevorzugt partiell in Streifenform aufgetragen.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sind als die Dicke. Die Dicke ist über die gesamte durch Länge und Breite bestimmte Flächenausdehnung des Klebebands möglichst gleich, vorzugsweise exakt gleich.

Das Klebeband liegt insbesondere in Bahnform vor. Unter einer Bahn wird ein Objekt verstanden, dessen Länge um ein Vielfaches größer ist als die Breite und die Breite entlang der gesamten Länge in etwa vorzugsweise genau gleich bleibend ausgebildet ist.

Das Klebeband kann in Form einer Rolle, also in Form einer archimedischen Spirale auf sich selbst aufgerollt, hergestellt werden.

Auf der freiliegenden Oberseite des ersten Trägers kann ein Rückseitenlack (Funktionsschicht) aufgetragen sein, um die Abrolleigenschaften des zur archimedischen Spirale gewickelten Klebebandes günstig zu beeinflussen. Dieser Rückseitenlack kann dazu Silikon- oder Fluorsilikonverbindungen sowie Polyvinylstearylcarbamat, Polyethyleniminstearylcarbamid oder fluororganische Verbindungen als dehäsiv wirkende Stoffe enthalten.

Die Umwicklung eines Kabelbaums mit dem beschriebenen Klebeband erfolgt dabei derart, dass beim Umwickeln eine Längsachse des Bandes im Wesentlichen parallel zur Verlaufsrichtung des Kabelbaums ausgerichtet ist. Im Querschnitt gesehen liegt das Klebeband dabei in Form einer archimedischen Spirale um den Kabelbaum (der Fachwelt auch als "Zigarrenwicklung" bekannt).

Ebenfalls vom erfinderischen Gedanken umfasst ist ein ummanteltes langgestrecktes Gut, wie insbesondere ein Kabelsatz, ummantelt mit einem erfindungsgemäßen Klebeband, sowie ein Fahrzeug, enthaltend ein derartig ummanteltes langgestrecktes Gut.

Die aus dem erfindungsgemäßen Klebeband hergestellte Längsbandagierung kann im Vergleich zu Schläuchen und selbstverschließenden und in Längsrichtung zu öffnenden Geflechtschläuchen sehr einfach um ovale und flache Bauformen zur Anwendung gebracht werden.

Um die richtige Anwendung des Klebebands insbesondere an Kabelbäumen sicherzustellen, kann zumindest eine in Längsrichtung verlaufende Kennzeichnungslinie auf der Oberseite des ersten Trägers vorhanden sein. Bevorzugt sind zwei Kennzeichnungslinien. Diese Kennzeichnungslinien unterscheiden sich optisch und/oder haptisch von der sie umgebenden Oberfläche.

Der zweite Träger soll den kompletten Umfang des Leitungssatzes schützen, ist beim Wickeln aber nicht zu erkennen, weil der erste Träger an der Außenseite des Klebebandes liegt. Durch eine erste Kennzeichnungslinie wird der Beginn des zweiten Trägers angezeigt. Nach der Umhüllung des Leitungssatzes soll das Ende des zweiten Trägers über die erste Kennzeichnungslinie (Start) hinweg erstrecken, damit eine umlaufende Schutzschicht erzeugt werden kann.

Die Position der zweiten Kennzeichnungslinie (Ende) ist der Breite des zweiten Trägers angepasst. Soll der zweite Träger eine komplette Umhüllung ergeben, so ist der Streifen nahe der Seitenkante des zweiten Trägers zu positionieren. Wenn die zweite Kennzeichnungslinie (Ende) nach der Umwicklung nicht mehr sichtbar ist, so ist ausreichend Umhüllung für den Leitungssatzdurchmesser aufgebracht worden. Wird ein im Durchmesser größer Leitungssatz mit dem Klebeband umwickelt, so bleibt die Kennzeichnungslinie (Ende) außen sichtbar. Wird ein im Durchmesser kleinerer Leitungssatz mit dem Klebeband umwickelt, so ist die Kennzeichnungslinie (Ende) nicht sichtbar, es wird allerdings mehr Klebeband verwickelt als rechnerisch notwendig. Der Schutz ist sichergestellt.

Die Markierung ist auf den Träger aufgebracht, beispielsweise durch Drucken. Alternativ oder zusätzlich kann aber auch so vorgegangen werden, dass die Markierung in den ersten Träger eingearbeitet ist. So lässt sich die Markierung als gleichsam eingewebter Kettfaden realisieren.

Die EP 3 245 265 A1 beschreibt die Verwendung einer derartigen Kennzeichnungslinie auf einem Klebeband.

Gemäß einer bevorzugten Ausführungsform der Erfindung ist also zumindest eine in Längsrichtung verlaufende Kennzeichnungsline auf der Oberseite des ersten Trägers vorhanden, vorzugsweise sind zwei Kennzeichnungslinien vorhanden, die insbesondere oberhalb der Längskanten des zweiten Trägers angeordnet sind.

Um ein besonders einfaches Arbeiten für den Anwender zu ermöglichen, sind Perforationen in dem Klebeband vorhanden, die insbesondere rechtwinklig zur Laufrichtung des Klebebands ausgerichtet und/oder in regelmäßigen Abständen angeordnet sind.

Die Perforation dient dabei in erster Linie als Abreißhilfe zur Ablängung auf die vorgegebene Länge. In dem Stück des Klebebands, das das Gut ummantelt, sollten keine Perforationen vorhanden sein, um eine negativen Auswirkungen auf die Abschirmungseigenschaften zu haben.

Besonders vorteilhaft lassen sich die Perforationen diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.

Weitere Möglichkeiten stellen gesteuert intermittierend arbeitende Schneidtechnologien dar wie beispielsweise die Verwendung von Lasern, Ultraschall, Hochdruckwasserstrahlen etc. Wird wie beim Laser- oder Ultraschallschneiden ein Teil der Energie als Wärme in das Trägermaterial eingebracht, lassen sich im Schneidbereich die Fasern verschmelzen, so dass ein störendes Ausfasern weitestgehend vermieden wird und man randscharfe Schneidkanten erhält. Letztere Verfahren eignen sich auch, um spezielle Schneidkantengeometrein zu erzielen, beispielsweise konkav oder konvex ausgeformte Schneidkanten.

Das Klebeband ist flexibel auf unterschiedlichen Kabeldurchmessern einsetzbar.

Mittels der vorteilhaften Kennzeichnung lässt sicher und einfach die fachgerechte Anwendung des Klebebands prüfen.

Das erfindungsgemäße Klebeband kann in den bekannten und üblichen Prozessen bei der der Kabelbandagierung aufgebracht werden.

Das Klebeband in Form aus der Kombination aus Gewebe und einer metallischen Schicht kann in verschieden Formen um den Leitungssatz gewickelt werden und ist in der Einbausituation im geringen Maß verformbar. Überraschend ist die Umhüllungslösung aus Gewebe und Metallfilm stabil und ohne Beschädigung auf den Leitungssatz einsetzbar. Die Umhüllung ist vibrationsresistent im Fahrbetrieb des Fahrzeuges und zeigt keine Veränderungen durch Umgebungstemperaturänderungen. Strukturierte vergrößerte metallische Oberflächen erhöhen den Abschirmungseffekt.

Die Längsbandagierung ist effektiver als die Spiralwicklung. Denn die Längsbandagierung erreicht überraschenderweise und für den Fachmann derartig nicht vorhersehbar Schirmungsraten, wie diese von einem Geflechtschirm bekannt sind.

Das Klebeband kann als flexible Umhüllung zwei oder mehr Leitungen gleichzeitig einschlagen und sich der Form der Kabelbündel in der Einbausituation anpassen.

Bei der Verwendung von vielen Kabel in einem kleinen Verbauraum kann es durch äußere Einflüsse zum Einkoppeln von Gleichtaktsignalen (Common-Mode-Signals) kommen, die zu unerwünschten Störgrößen führen können. Besonders die Verwendung von unterschiedlichen Spannungen in elektrisch angetriebenen Fahrzeugen kann zu diesen Effekten führen. Diese Einkopplung von Gleichtaktsignalen ist trotz Verwendung von Geflechtschirmungen nicht in jeder Einbausituation kontrollierbar. Eine gemeinsame Schirmung von Kabeln mit Klebeband in einer solchen Einbausituation kann zu einer Dämpfung von 20 bis 30 dB(A) führen und eine Störgröße ausreichend gut minimieren.

Im Folgenden soll die Erfindung anhand mehrerer Figuren näher erläutert werden, ohne damit die Erfindung unnötig einschränken zu wollen.

Es zeigen
- Figur 1: das Verfahren der Abriebmessung (detaillierte Erläuterungen folgen später),
- Figuren 2a, 2b und 2c: Varianten von Autos mit Hybrid- oder Elektroantrieb, die einen Kabelsatz aufweisen, der mit dem erfindungsgemäßen Klebeband ummantelt ist,
- Figuren 3a, 3b und 3c: das Klebeband in unterschiedlichen Ausprägungen im seitlichen Schnitt,
- Figuren 4a und 4b: eine Längsbandagierung des Kabelbaums mit einem Klebeband gemäß Figur 3a, wobei die metallische Schicht keinen Ringschluss bildet (a) beziehungsweise einen Ringschluss bildet (b),
- Figur 5a und 5b: eine Längsbandagierung des Kabelbaums mit einem Klebeband gemäß Figur 3b, wobei die metallische Schicht einen Ringschluss bildet (a) beziehungsweise in der metallischen Schicht eine Ableitleitung vorhanden ist (b).

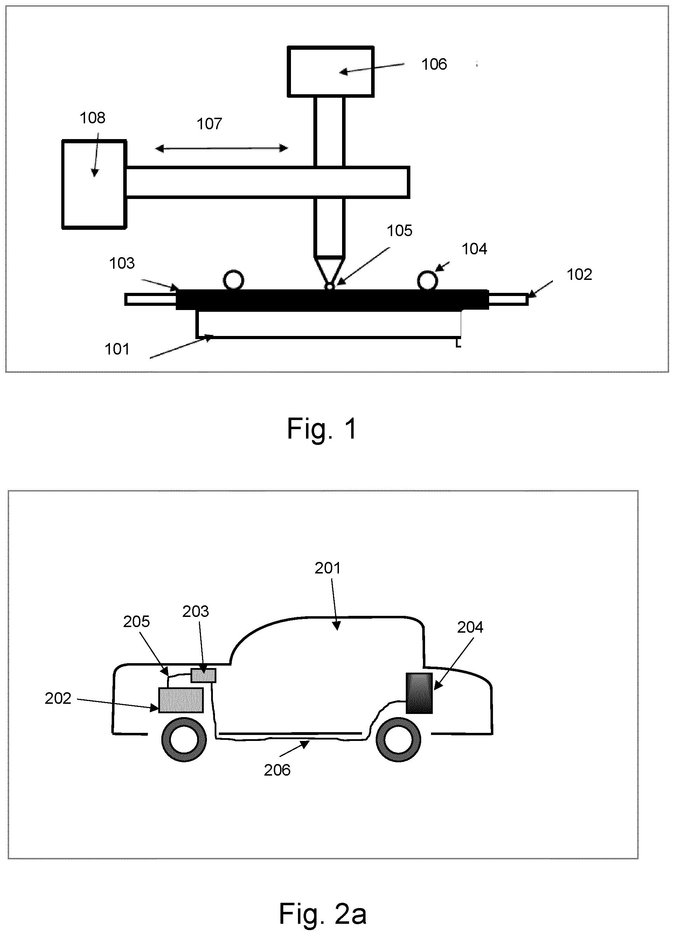

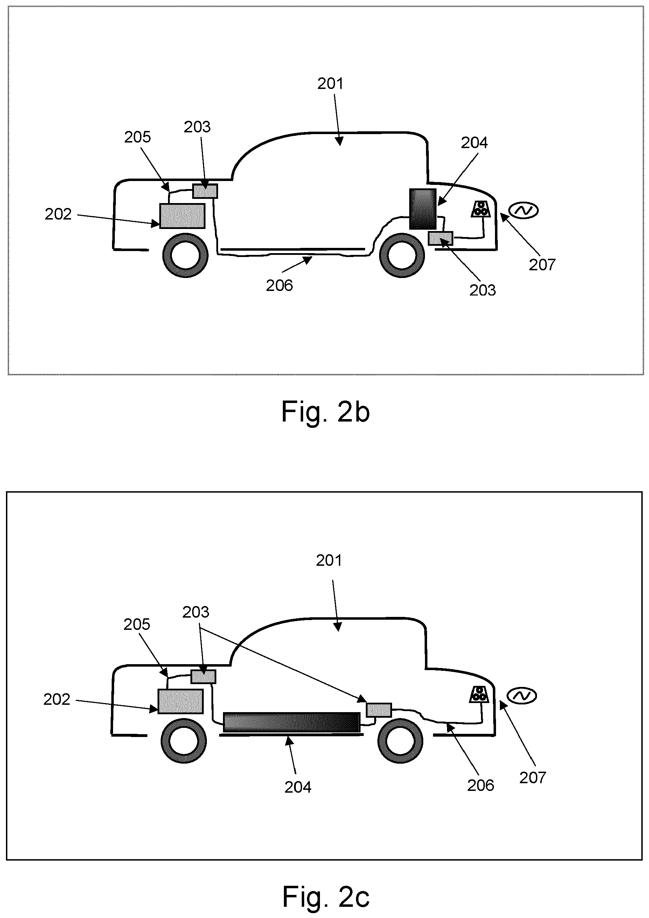

In den Figuren 2a, 2b und 2c sind Fahrzeuge mit unterschiedlichen Antriebskonzepten dargestellt. Die einzelnen Komponenten innerhalb des Fahrzeugs sind mit Kabeln verbunden.

Die Figur 2a zeigt ein Hybrid-Fahrzeug 201, HEV, die Figur 2b einen Plugin-Hybrid 201, PHEV.

Beide Konzepte weisen eine Hochvoltbatterie 204 auf, von der der Strom über ein Hochvoltleitungssatz zu einem Wechselrichter 203 geführt wird und dann weiter über einen Motorleitungssatz 205 zum elektrischen Motor 205. Der Hochvoltleitungssatz 206 ist mit dem erfindungsgemäßen Klebeband ummantelt.

Der PHEV weist im Unterschied zum HEV noch einen Ladestromanschluss 207 auf, mit dem über einen weiteren Wechselrichter 203 die Hochvoltbatterie 204 geladen werden kann.

Bei dem klassischen Elektro-Fahrzeug 201, BEV, gemäß Figur 2c ist eine Hochvoltbatterie 204 vorhanden, die über einen mit dem erfindungsgemäßen Klebeband ummantelten Hochvoltleitungssatz 206 vom Ladestromanschluss 207 geladen werden kann.

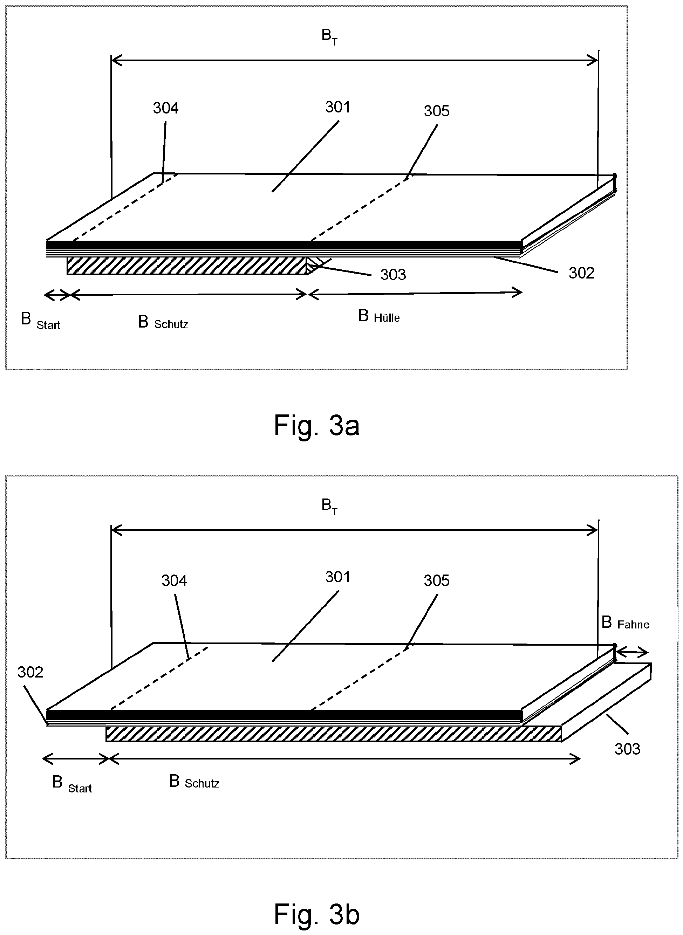

In der Figur 3a ist die Variante des Klebebands gezeigt, bei die Breite B_{Schutz} des zweiten Trägers in Form der metallischen Schicht 303 auf der Klebeschicht 302 so gewählt ist, dass die Breite B_{Schutz} geringer ist als die Breite B_{T} des ersten Trägers 301, und zwar dergestalt, dass der erste Träger 301 mit der bevorzugt vollflächig aufgetragenen Klebeschicht 302 beidseitig gegenüber den Seitenkanten des zweiten Trägers 303 übersteht, so dass sich ein zweiter Überstand mit einer Breite B_{Hülle} ergibt.

Das Klebeband weist gemäß Figur 3a einen ersten Träger 301 aus Gewebe mit einer Breite B_{T} auf. Auf der Oberseite des ersten Trägers 301 sind zwei Kennzeichnungslinien (Kennzeichnungslinie Start 304, Kennzeichnungslinie Ende 305) vorhanden, die oberhalb der Längskanten des zweiten Trägers 303 angeordnet sind.

Auf der Unterseite des ersten Trägers 301 ist vollflächig eine Klebemasse 302 aufgebracht. Unterhalb der Klebemasse 302 ist der zweite Träger 303 aufgebracht, der eine geringere Breite B_{Schutz} als der erste Träger 301 aufweist. Der zweite Träger 303 lässt beidseits zwei Klebemassestreifen mit der jeweiligen Breite B_{Start} und B_{Hülle} frei.

Der erste Klebemassestreifen dient zur Vorfixierung, der zweite fixiert das Klebeband nach dem Umwickeln.

In der Figur 3b ist die (zweite) Variante des Klebebands gezeigt, bei der die Breite B_{Schutz} des zweiten Trägers in Form der metallischen Schicht 303 auf der bevorzugt vollflächig aufgetragenen Klebeschicht 302 so gewählt ist, dass der zweite Träger 303 gegenüber der zweiten Seitenkante des ersten Trägers 301 mit der Klebeschicht 302 übersteht, so dass sich ein zweiter Überstand mit einer Breite B_{Fahne} ergibt.

Die Breite B_{Schutz} des zweiten Trägers 303 ist (geringfügig) größer als die Breite B_{T} des ersten Trägers 301 gewählt, so dass die Breite B_{Start} des ersten Überstands kleiner ist als die Breite B_{Fahne} des zweiten Überstandes.

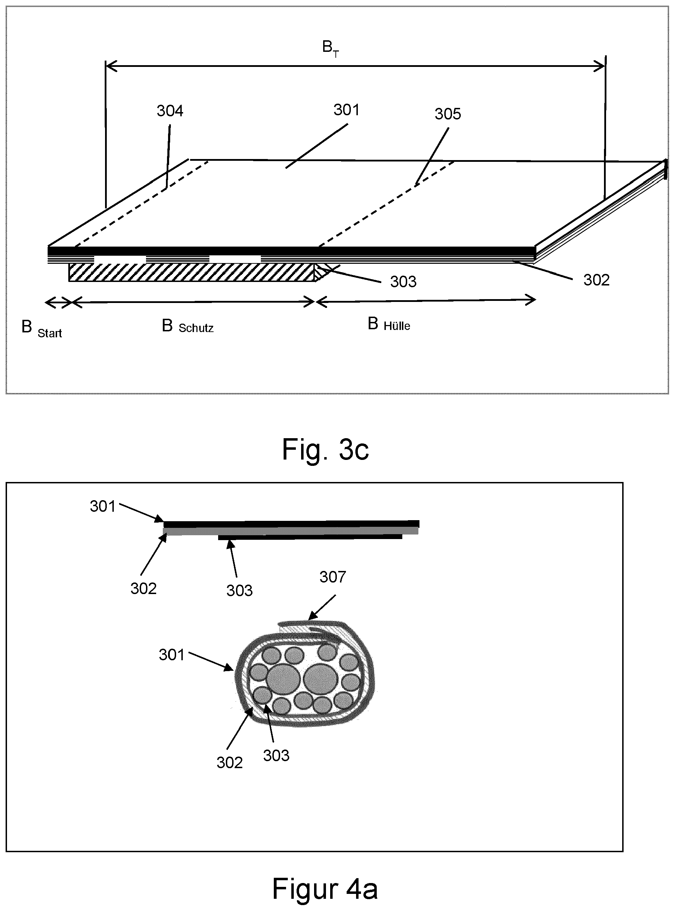

Figur 3c zeigt das Klebeband nach Figur 3a, allerdings ist die Klebemasseschicht 302 nicht vollflächig auf dem ersten Träger 301 aufgebracht, sondern weist zwei klebemassefreie Streifen auf, die sich oberhalb des zweiten Trägers 303 befinden. Dadurch wird das Klebeband flexibler.

In der Figur 4a wird das Klebeband gemäß Figur 3a axial, also in Form einer archimedischen Spirale, um einen Kabelsatz 306 gewickelt, so dass dieser komplett umschlungen ist (360°).

Der zweite Träger 303 lässt beidseits zwei Klebemassestreifen mit der jeweiligen Breite B_{Start} und B_{Hülle} frei. Der erste Klebemassestreifen Breite B_{Start} dient zur Vorfixierung des Klebebands am Kabelsatz 306. Dann erfolgt das Einschlagen des Kabelsatzes 306 dergestalt, dass eine Überlappung 307 zum Verschluss des Klebebands entsteht, die die Breite B_{Hülle} aufweist.

Die Ummantelung erfolgt so, dass die metallische Schicht 303 keinen Ringschluss bildet.

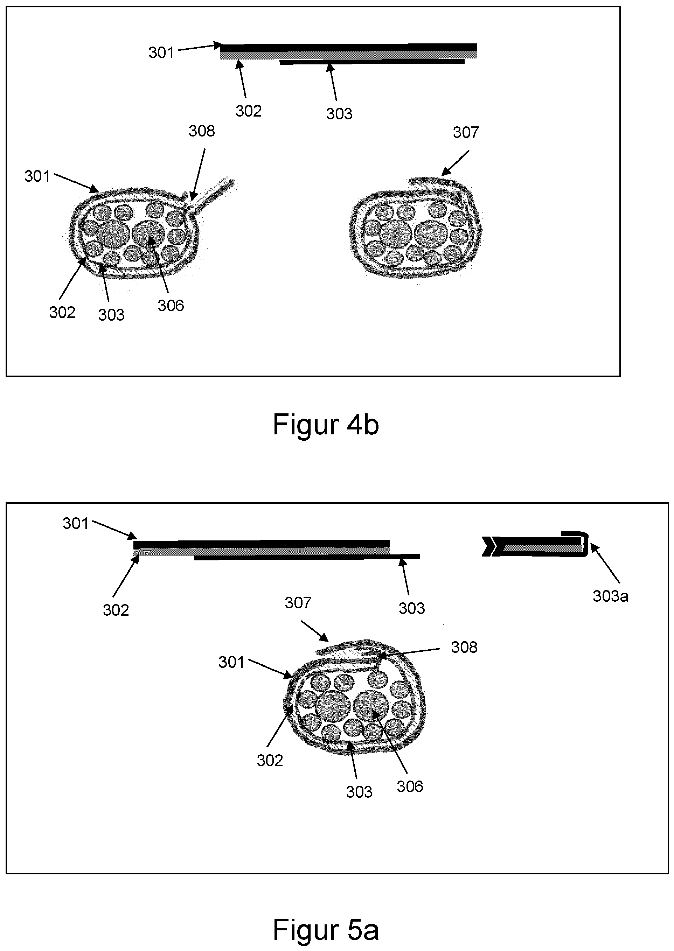

In der Figur 4b wird das Klebeband gemäß Figur 3a ebenfalls axial, also in Form einer archimedischen Spirale, um einen Kabelsatz 306 gewickelt, so dass dieser komplett umschlungen ist (360°).

Der zweite Träger 303 lässt beidseits zwei Klebemassestreifen mit der jeweiligen Breite B_{Start} und B_{Hülle} frei. Der erste Klebemassestreifen Breite B_{Start} dient zur Vorfixierung des Klebebands am Kabelsatz 306. Dann erfolgt das Einschlagen des Kabelsatzes 306 dergestalt, dass eine Überlappung 307 zum Verschluss des Klebebands entsteht, die die Breite B_{Hülle} aufweist.

Die Ummantelung erfolgt diesmal so, dass die metallische Schicht 303 einen Ringschluss bildet und es somit eine Kontaktfläche 308 gibt.

In der Figur 5a wird das Klebeband gemäß Figur 3b axial, also in Form einer archimedischen Spirale, um einen Kabelsatz 306 gewickelt, so dass dieser komplett umschlungen ist (360°).

Der zweite Träger 303 steht gegenüber der zweiten Seitenkante des ersten Trägers 301 mit der Klebeschicht 302 über, so dass sich ein zweiter Überstand 303a mit einer Breite B_{Fahne} ergibt.

Vor dem Einschlagen des Kabelbaums 306 wird der zweite Überstand 303a über die zweite Kante des ersten Trägers 301 umgeschlagen, so dass die zweite Seitenkante von der metallischen Schicht 303 umgeben ist.

Die Ummantelung erfolgt dann so, dass die metallische Schicht 303 über die Kontaktfläche 308 einen Ringschluss bildet.

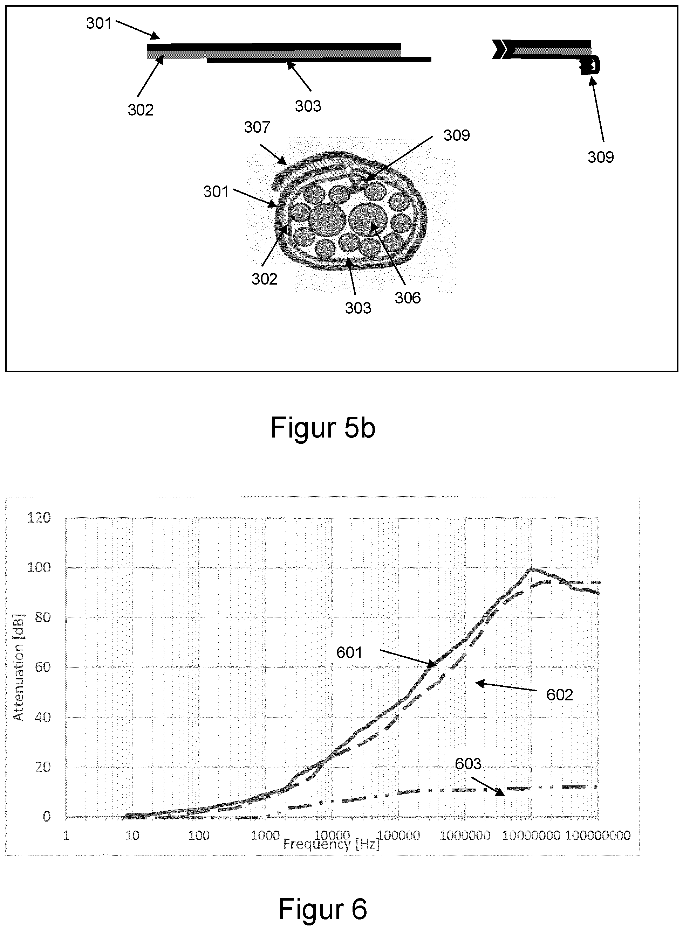

In der Figur 5b wird das Klebeband gemäß Figur 3b ebenfalls axial, also in Form einer archimedischen Spirale, um einen Kabelsatz 306 gewickelt, so dass dieser komplett umschlungen ist (360°).

Der zweite Träger 303 steht gegenüber der zweiten Seitenkante des ersten Trägers 301 mit der Klebeschicht 302 über, so dass sich ein zweiter Überstand 303a mit einer Breite B_{Fahne} ergibt.

Vor dem Einschlagen des Kabelbaums 306 wird der zweite Überstand 303a um eine unisolierte Ableitleitung 309 umgeschlagen, so dass die die Ableitleitung 309 von der metallischen Schicht 303 umgeben ist.

Die Ummantelung erfolgt dann bevorzugt so, dass die metallische Schicht 303 über die Kontaktfläche 308 zusätzlich einen Ringschluss bildet.

### Durchführung der Tests

Die Messungen werden - soweit nicht ausdrücklich anders erwähnt - bei einem Prüfklima von 23 ± 1 °C und 50 ± 5 % rel. Luftfeuchte durchgeführt.

### Abriebbeständigkeit eines Klebebandes

Die Prüfung und Klassifizierung von Klebebändern für die Kabelummantelung erfolgt in der Automobilindustrie nach umfangreichen Normenwerken wie zum Beispiel der VW 60360-3 "Schutzsysteme für Leitungssätze in Kraftfahrzeugen, Prüfanforderungen für Schläuche" (2019-05), der BMW GS 95008-3-1 "Schutzsysteme für Leitungssätze in Kraftfahrzeugen, Klebebänder, Anforderungen, Prüfungen" oder der ES-KU5T-1A303-AA rev. E (2017/06) "Harness Tape Performance Specification". Im Folgenden werden diese Normen verkürzt mit VW- , BMW- beziehungsweise Ford-Spezifikation bezeichnet.

Die Abriebbeständigkeit eines Klebebandes und Schutzschlauches wird nach BMW und VW ebenfalls anhand eines definierten Prüfverfahrens bestimmt. Die Klassifizierung der Klebebänder und Schläuche hinsichtlich ihrer Abriebbeständigkeit wird bei einem Dorndurchmesser von 5 mm in der Tabelle 1 (Klassifizierung Abriebbeständigkeit Klebbänder nach BMW GS 95008-3-1) wiedergegeben, Klebebänder und Schläuche werden nach gleichen Abriebklassen eingeordnet, wobei Schläuche zusätzlich bei erhöhter Umgebungstemperatur prüft werden können (siehe Tabelle 2: Klassifizierung Abriebbeständigkeit Schläuche nach VW 60360-3)

**Tabelle 1: Klassifizierung Abriebbeständigkeit Klebbänder nach BMW GS 95008-3-1**

| **Abriebklasse (bei RT)** | **Anforderung** |
|---|---|
| A kein Abriebschutz | < 100 Hübe |
| B geringer Abriebschutz | 100 bis 499 Hübe |
| C mittlerer Abriebschutz | 500 bis 999 Hübe |
| D hoher Abriebschutz | 1000 bis 4999 Hübe |
| E sehr hoher Abriebschutz | 5000 bis 14999 Hübe |
| F extrem hoher Abriebschutz | 15000 bis 29999 Hübe |
| G Abriebschutz für Sonderanwendungen | ≥ 30000 Hübe |

**Tabelle 2: Klassifizierung Abriebbeständigkeit Schläuche nach VW 60360-3**

| **Abriebklasse** | | | | **Anforderung** |
|---|---|---|---|---|
| Bei RT | Bei 40 °C | Bei 90 °C | | |
| A | AT40 | AT90 | kein Abriebschutz | < 100 Hübe |
| B | BT40 | BT90 | geringer Abriebschutz | 100 bis 499 Hübe |
| C | CT40 | CT90 | mittlerer Abriebschutz | 500 bis 999 Hübe |
| D | DT40 | DT90 | hoher Abriebschutz | 1000 bis 4999 Hübe |
| E | ET40 | ET90 | sehr hoher Abriebschutz | 5000 bis 14999 Hübe |
| F | FT40 | FT90 | extrem hoher Abriebschutz | 15000 bis 29999 Hübe |
| G | GT40 | GT90 | Abriebschutz für Sonderanwendungen | ≥ 30000 Hübe |

Der Prüfling 103 mit einer Länge von 10 cm wird um einen 5 mm dicken Stahldorn 102 einlagig in Längsrichtung des zu prüfenden Produktes gewickelt und in einen Probenhalter 101 gelegt. Durch einen Niederhalter 104 wird der Prüfling 103 fixiert. Bei nicht vollflächig gleichartigem Klebbandaufbau wird der Teil auf Abrieb getestet, der die Schutzfunktion in der Anwendung darstellt. Als Abriebwerkzeug dient ein Stahldraht 105 mit 0,45 mm Durchmesser, der unter einer Gewichtsbelastung von 7 N (erzeugt durch ein Auflagegewicht 106) mittig über den Prüfling 103 reibt, indem durch einen Antrieb 108 der Stahldraht in einer zyklischen Bewegung 107 parallel zur Achse des Stahldorns 102 hin- und herbewegt wird. Als Maßzahl für die Abriebeigenschaften wird die Anzahl der Doppelhübe bestimmt, bis der Prüfling 103 zerstört ist.

Durch die Messung der Abriebfestigkeit kann die Beständigkeit gegenüber schärferen Gegenständen wie zum Beispiel einer Metallkante in der Anwendung simuliert werden. Das Verfahren der Abriebmessung ist in der Figur 1 gezeigt.

### Biegekraft

Die Messung der Weichheit ist ein wesentliches Qualitätsmerkmal von Textilien, Leder, Papier und Kunststoffen mit biegeschlaffen Eigenschaften. Die Prüfung der Biegekraft, nach dem Softometerverfahren, dient dazu unter festgelegten Bedingungen die Weichheit bzw. Steifigkeit der flächenartigen Werkstoffe vergleichbar zu bestimmen.

Für die Bestimmung der Biegekraft an einer textilen Fläche wird ein Musterstück der Größe 75 x 60 mm ausgestanzt. Ein drehbar gelagerter Probenhalter aus zwei parallelen Platten fixiert die ausgestanzte Probe auf einer Fläche von 60 x 60 mm. Der Probenhalter mit der Probe wird gegen einen Kraftmessfühler geschwenkt, so dass der nicht eingespannte Teil der Probe mit der Länge von 15 mm um 30° gebogen wird. Die in dieser Position benötigte Biegekraft wird nach 10 s Messzeit als Biegekraft in der Einheit mN gemessen.

Zur Beschreibung der textilen Eigenschaften kann eine Probe in Längs- und Querrichtung und wenn die Anwendung dies erfordert auch in einer diagonalen Richtung zur Messung ausgestanzt werden. Dabei beschreibt die Ausdehnung in Richtung der 75 mm langen Probenseite auch die Biegerichtung, die beurteilt werden soll.

Biegesteifigkeit längs: die längere Seite des Prüflings verläuft parallel zur Produktionsrichtung des Materials beziehungsweise Kettrichtung der Gewebe Biegesteifigkeit quer: die längere Seite des Prüflings verläuft in rechten Winkel zur Produktionsrichtung des Materials beziehungsweise Kettrichtung der Gewebe

Die Biegerichtung des Prüflings entspricht in allen Fällen der späteren Anwendung des Klebbandes, also das Material mit EMV Schutzfunktion ist zu den Leitungen des Kabelsatzes gerichtet

Beim Flächengewicht wird der doppellagige Bereich betrachtet, einlagige Randbereiche haben die Halte- und Fixierfunktion.

### Elektromagnetische Schirmung / Dämpfung

Die Hochvolt-Mantelleitungen mit einer Geflechtschirmung werden für die Versorgung von elektrischen Antrieben in Kraftfahrzeugen eingesetzt. Die Eigenschaften solcher Leitungen werden durch die Prüfung gemäß BMW-Norm GS 95007-6-2 bestimmt. Die Hochfrequenzeigenschaften und die Dämpfung des umhüllenden Schirms werden im Frequenzbereich von 100 Hz bis 200 MHz durchgeführt. Die Verwendung von anderen Materialien als Ersatz oder als Ergänzung zu den bekannten Geflechtschirmen werden im Vergleich zu diesen auf Hochfrequenzfähigkeit gemessen und bewertet. Die Prüfung wird mit einer Hochvoltleitung mit einem Leitungsquerschnitt von 35 mm² durchgeführt. Die Schirmung der Prüfleitung wird über eine Länge vom 100 cm auf die Leitung aufgebracht und an beiden Enden elektrisch leitend aufgelegt. Im Netzwerkanalysator eingebaute Messgeneratoren (Sender) speisen das Messobjekt und erfassen zugleich die dabei auftretenden Signaländerungen durch den Messempfänger im Netzwerkanalysator. Im Frequenzbereich von 100 Hz bis 30 Mhz wird die Dämpfung (gemessen in dB) des verwendeten Schirms um die Hochvoltleitung gemessen.

### Beispiele

### Skizze der Beispiele

Das erfindungsgemäße Klebeband wird nachfolgend in bevorzugter Ausführung anhand mehrerer Beispiele beschrieben, ohne damit die Erfindung irgendeiner Beschränkung unterwerfen zu wollen.

Des Weiteren ist ein Vergleichsbeispiel aufgeführt, in dem ein untaugliches Klebeband dargestellt ist.

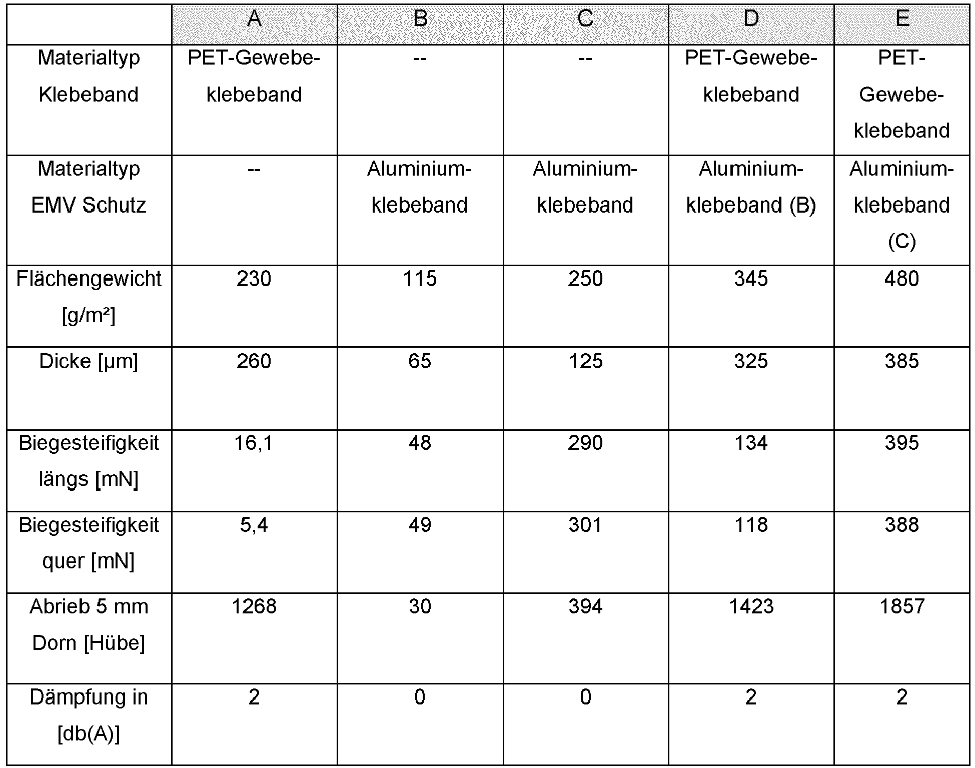

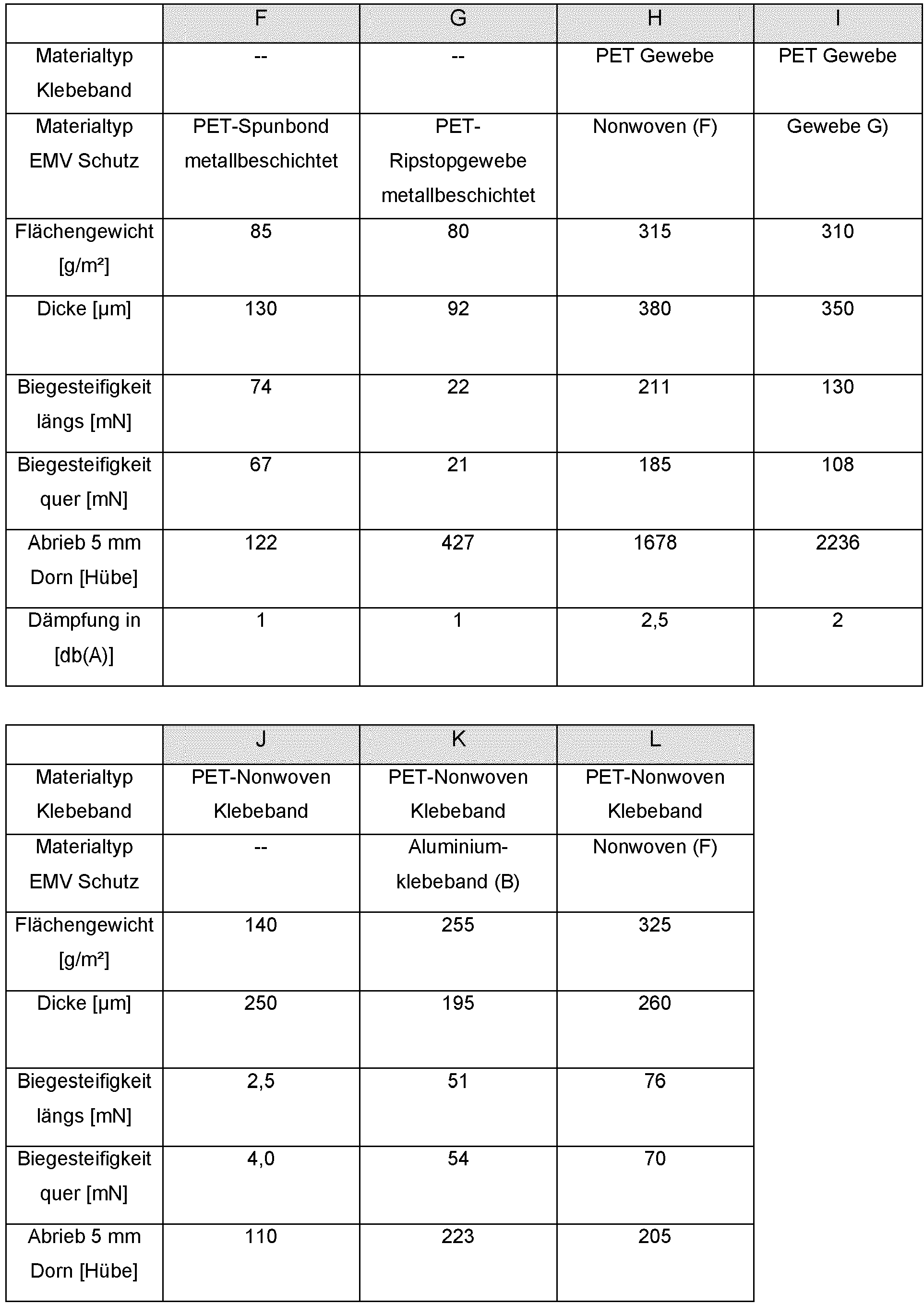

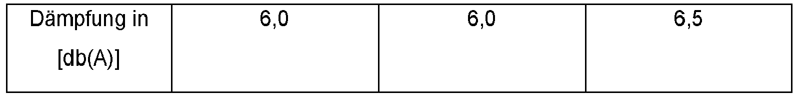

- Biegesteifigkeit längs:: die längere Seite des Prüflings verläuft parallel zur Produktionsrichtung des Materials beziehungsweise Kettrichtung der Gewebe
- Biegesteifigkeit quer:: die längere Seite des Prüflings verläuft in rechten Winkel zur Produktionsrichtung des Materials beziehungsweise Kettrichtung der Gewebe

Die Biegerichtung des Prüflings entspricht in allen Fällen der späteren Anwendung des Klebbandes, also das Material mit EMV Schutzfunktion ist zu den Leitungen des Kabelsatzes gerichtet

Beim Flächengewicht wird der doppellagige Bereich betrachtet, einlagige Randbereiche haben die Halte- und Fixierfunktion.

In der Figur 6 sind die Messergebnisse der Dämpfungsmessung angegeben.

Es zeigt sich, dass die Dämpfung bei der Längsbandagierung die Werte eines Geflechtschirms erreicht. Die Dämpfungswerte bei spiralförmiger Bandagierung fallen demgegenüber ab.

### Bezugszeichenliste

- 101: Probenhalter
- 102: Stahldorn
- 103: Prüfling
- 104: Niederhalter
- 105: Wechselbarer Stahldraht
- 106: Auflagegewicht
- 107: Zyklische Bewegung
- 108: Antrieb

- 201: Hybrid-Fahrzeug, HEV / Plugin-Hybrid-Fahrzeug, PHEV / Elektro-Fahrzeug, BEV
- 202: elektrischer Motor
- 203: Wechselrichter, Inverter
- 204: Hochvoltbatterie
- 205: Motorleitungssatz
- 206: Hochvoltleitungssatz
- 207: Ladestromanschluss

- 301: Erster Träger
- 302: Klebemasseauftrag
- 303: Zweiter Träger
- 303a: Zweiter Überstand
- 304: Kennzeichnungslinie Start
- 305: Kennzeichnungslinie Ende
- 306: Kabelsatz in Form verschiedener Leitungen
- 307: Überlappung zum Verschluss des Klebebands
- 308: Kontaktfläche
- 309: Ableitleitung

- 601: Hochvoltleitung 35 mm² mit Geflechtschirm
- 602: Hochvoltleitung 35 mm² mit Längsbandagierung aus Aluminium und Gewebe
- 603: Hochvoltleitung 35 mm² mit spiralförmiger Bandagierung aus Aluminium und Gewebe

## Patentansprüche

1. Klebeband, insbesondere zur Längsummantelung von langgetrecktem Gut wie Kabelsätzen in einem Automobil, umfassend einen Träger mit einer Oberseite und einer Unterseite, wobei der Träger bezogen auf die Querrichtung eine Breite B_{T} aufweist, und mindestens eine auf der Unterseite des Trägers aufgetragene Klebemassenschicht,
wobei auf der Klebeschicht ein zweiter Träger vorhanden ist,
der erste Träger mit der Klebeschicht zumindest an einer Längskante gegenüber einer Seitenkante des zweiten Trägers übersteht, wobei der erste Überstand eine Breite von B_{Start} aufweist,
**dadurch gekennzeichnet, dass**
der erste Träger ein Gewebe oder ein Vlies ist und der zweite Träger eine metallische Schicht ist und der erste Träger ein Flächengewicht von 50 g/m² bis 600 g/m² aufweist.

2. Klebeband nach Anspruch 1,
**dadurch gekennzeichnet, dass**
die Breite B_{Schutz} des zweiten Trägers auf der Klebeschicht so gewählt ist, dass die Breite B_{Schutz} geringer ist als die Breite B_{T} des ersten Trägers, und zwar dergestalt, dass der erste Träger mit der Klebeschicht beidseitig gegenüber den Seitenkanten des zweiten Trägers übersteht, so dass sich ein zweiter Überstand mit einer Breite B_{Hülle} ergibt.

3. Klebeband nach Anspruch 1,
**dadurch gekennzeichnet, dass**
die Breite B_{Schutz} des zweiten Trägers auf der Klebeschicht so gewählt ist, dass der zweite Träger gegenüber der zweiten Seitenkante des ersten Trägers mit der Klebeschicht übersteht, so dass sich ein zweiter Überstand mit einer Breite B_{Fahne} ergibt.

4. Klebeband nach zumindest einem der Ansprüche 1 bis 3,
**dadurch gekennzeichnet, dass**
• B_{Start} eine Breite von 3 bis 20 mm, vorzugsweise 5 bis 10 mm
• B_{Schutz} eine Breite von 50 bis 200 mm, vorzugsweise 80 bis 160 mm auf oder eine Breite von 100 bis 400 mm, vorzugsweise 160 bis 320 mm, wenn das Gut zweilagig eingeschlagen werden soll,
• B_{Hülle} eine Breite von 50 bis 200 mm, vorzugsweise 80 bis 160 mm und/oder
• B_{Fahne} eine Breite von 50 bis 200 mm, vorzugsweise 80 bis 160 mm aufweist.

5. Klebeband nach zumindest einem der vorherigen Ansprüche,
**dadurch gekennzeichnet, dass**
das Gewebe wie folgt aufgebaut ist:
• die Fadenzahl in der Kette beträgt 10 bis 60/cm
• die Fadenzahl im Schuss beträgt 10 bis 40/cm
• die Kettfäden besitzen ein Garngewicht zwischen 40 und 400 dtex, insbesondere zwischen 44 und 330 dtex, besonders bevorzugt von 167 dtex
• die Schussfäden besitzen ein Garngewicht zwischen 40 und 660 dtex, insbesondere zwischen 44 und 400 dtex, besonders bevorzugt von 167 dtex

6. Klebeband nach zumindest einem der vorherigen Ansprüche,
**dadurch gekennzeichnet, dass**
das Vlies ein Spinnvlies ist.

7. Klebeband nach zumindest einem der vorherigen Ansprüche,
**dadurch gekennzeichnet, dass**
der Klebemassenauftrag, bezogen auf die Trägerfläche, bevorzugt zwischen 40 und 160 g/m², vorzugsweise zwischen 60 und 130 g/m², weiter vorzugsweise zwischen 80 und 100 g/m liegt.

8. Klebeband nach zumindest einem der vorherigen Ansprüche,
**dadurch gekennzeichnet, dass**
als metallische Schicht verwendet werden
- Aluminiumfolie, insbesondere mit einer Dicke von 15 bis 100 µm
- Kupferfolie, insbesondere mit einer Dicke von 10 bis 80 µm
- Edelstahlfolie, insbesondere mit einer Dicke von 10 bis 60 µm
- Schichtlaminate aus einer Kunststofffolie und metallischen Oberfläche
- Metallisierte Gewebe oder Vliese

9. Klebeband nach zumindest einem der vorherigen Ansprüche,
**dadurch gekennzeichnet, dass**
als Klebemasse eine acrylatbasierende Klebemasse verwendet wird.

10. Klebeband nach zumindest einem der vorherigen Ansprüche,
**dadurch gekennzeichnet, dass**
zumindest eine in Längsrichtung verlaufende Kennzeichnungsline auf der Oberseite des ersten Trägers vorhanden ist, vorzugsweise, dass zwei Kennzeichnungslinien vorhanden sind, die insbesondere oberhalb der Längskanten des zweiten Trägers angeordnet sind.

11. Verwendung eines Klebebandes nach zumindest einem der vorherigen Ansprüche zum Ummanteln von langgestrecktem Gut wie Kabeln in einem Automobil, wobei das langgestreckte Gut in axialer Richtung von dem Klebeband umhüllt wird.

12. Langgestrecktes Gut, wie insbesondere ein Kabelsatz, ummantelt mit einem Klebeband nach zumindest einem der vorherigen Ansprüche.

13. Fahrzeug, enthaltend ummanteltes langgestrecktes Gut nach Anspruch 12.
